(19) Europäisches Patentamt

European Patent Office

Office européen des brevets

(11) **EP 4 564 568 A1**

(12) **EUROPEAN PATENT APPLICATION**

(43) Date of publication:
**04.06.2025 Bulletin 2025/23**

(21) Application number: **24212703.3**

(22) Date of filing: **13.11.2024**

(51) International Patent Classification (IPC):
**H01M 50/383** (2021.01)

(52) Cooperative Patent Classification (CPC):
**H01M 50/383; H01M 10/486;** H01M 2200/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 KR 20230168371**

(71) Applicant: **SAMSUNG SDI CO., LTD.
Yongin-si, Gyeonggi-do 17084 (KR)**

(72) Inventor: **KIM, Giyoung
17084 Yongin-si (KR)**

(74) Representative: **Marks & Clerk LLP
15 Fetter Lane
London EC4A 1BW (GB)**

(54) **RECHARGEABLE BATTERY PACK**

(57) A rechargeable battery pack includes a plurality of unit cells neighboring to each other, a case having an interior space accommodating the plurality of unit cells, and a fire-extinguishing agent spaced apart from the plurality of unit cells in the interior space of the case. The fire-extinguishing agent is configured to generate a solid aerosol at a reference temperature to extinguish a fire in one or more of the plurality of unit cells.

## FIG. 1

EP 4 564 568 A1

**Description**

**BACKGROUND**

**1. Field**

Aspects of embodiments of the present disclosure relate to a rechargeable battery pack.

**2. Description of the Related Art**

Generally, a rechargeable battery is a battery that is designed to be repeatedly charged and discharged.
A rechargeable battery pack may include a case accommodating a plurality of unit cells and the plurality of unit cells.
In conventional secondary battery packs, when one unit cell from among a plurality of unit cells ignites, neighboring unit cells ignited due to the flame generated from the ignited unit cell.

**SUMMARY**

Embodiments of the present disclosure provide a rechargeable battery pack configured to actively extinguish an ignited unit cell from among plurality of unit cells.
A rechargeable battery pack, according to an embodiment of the present disclosure, includes a plurality of unit cells neighboring to each other, a case having an interior space accommodating the plurality of unit cells, and a fire-extinguishing agent spaced apart from the plurality of unit cells in the interior space of the case and configured to generate a solid aerosol at a reference temperature. When the interior space of the case has a known volume, a weight of the fire-extinguishing agent satisfies Equation 1:

$$Y=0.0088X+0.211$$

in which Y is a weight of the fire-extinguishing agent per volume of the interior space of the case (g/L), and X is a battery capacity (Wh) of one of the plurality of unit cells.
In the Equation 1, X may satisfy Equation 2:

$$X=V*6.8/Z$$

in which V is a battery capacity (Wh) of one of the plurality of unit cells, and Z is a volume (L) of the interior space of the case.
When a volume of the interior space of the case is 10L, the weight of the fire-extinguishing agent may be in a range of 1g to 32g.
A distance between the fire-extinguishing agent and the plurality of unit cells may be in a range of 2 mm or about 2 mm to 70 mm or about 70 mm.
A distance between the fire-extinguishing agent and the plurality of unit cells may be in a range of 2 mm or about 2 mm to 32 mm or about 32 mm.
A distance between the fire-extinguishing agent and the plurality of unit cells may be 20 mm or about 20 mm.
The volume of the interior space of the case may be 6.8L or about 6.8L.
The solid aerosol generated by the fire-extinguishing agent may include a potassium radical.
The fire-extinguishing agent may include a mixture including a potassium compound and a resin.
The fire-extinguishing agent may further include a mesh supporting the mixture.
The mesh may penetrate the mixture.
The plurality of unit cells may be located on a lower side of the interior space of the case, and the fire-extinguishing agent may be located on an upper side of the interior space of the case.
The fire-extinguishing agent may be attached to an inner surface of the case.
A rechargeable battery pack may further include a battery management unit connected to the plurality of unit cells and the fire-extinguishing agent and arranged between the plurality of unit cells and the fire-extinguishing agent. The battery management unit may be configured to sense the temperature each of the plurality of unit cells and, when a temperature of one of the plurality of unit cells exceeds the reference temperature, to heat the fire-extinguishing agent.
The battery management unit may further include a heater attached to the fire-extinguishing agent, and the battery management unit may be configured to heat the heater.
According to an embodiment, a rechargeable battery pack configured to actively extinguish an ignited unit cell from among plurality of unit cells is provided.

At least some of the above and other features of the invention are set out in the claims.

## BRIEF DESCRIPTION OF THE DRAWINGS

FIG. 1 is a schematic illustration of a rechargeable battery pack according to an embodiment.

FIG. 2 shows an example of the fire-extinguishing agent shown in FIG. 1.

FIG. 3 to FIG. 5 are graphs showing experimental results of the first extinguishing effect according to weight of a fire-extinguishing agent in a rechargeable battery pack according to an embodiment.

FIG. 6 to FIG. 8 are graphs showing experimental results of the first extinguishing effect according of a distance between a plurality of unit cells and a fire-extinguishing agent in a rechargeable battery pack according to an embodiment.

FIG. 9 is a schematic illustration of a rechargeable battery pack according to another embodiment.

## DETAILED DESCRIPTION OF THE DRAWINGS

The present disclosure will be described more fully hereinafter with reference to the accompanying drawings, in which embodiments of the present disclosure are shown. As those skilled in the art would realize, the embodiments described herein may be modified in various different ways, all without departing from the scope of the present disclosure.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of 35 U.S.C. § 112(a) and 35 U.S.C. § 132(a).

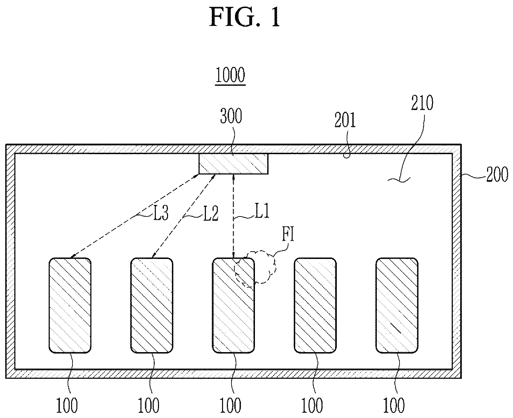

Hereinafter, a rechargeable battery pack 1000, according to an embodiment of the present disclosure, will be described with reference to FIG. 1 to FIG. 8.

The rechargeable battery pack 1000 may include a plurality of unit cells 100 and a case 200 accommodating (e.g., configured to accommodate) the plurality of unit cells 100. The rechargeable battery pack 1000 is not, however, limited thereto, and may include a plurality of rechargeable battery modules, each of which includes a plurality of unit cells and a case accommodating the plurality of unit cells.

Referring to FIG. 1, a rechargeable battery pack 1000, according to an embodiment, includes a plurality of unit cells 100, a case 200, and a fire-extinguishing agent 300.

The plurality of unit cells 100 neighbor (e.g., are adjacent to or stacked next to) each other and are accommodated in an interior space 210 of the case 200. The plurality of unit cells 100 may have various suitable rechargeable battery capacities and various suitable rechargeable battery shapes. For example, each of the plurality of unit cells 100 may have a battery capacity of about 18Wh and may have a circular cylinder form, but the present disclosure is not limited thereto. The plurality of unit cells 100 may be connected to each other in series and/or in parallel by using various known connection elements, such as busbars. The plurality of unit cells 100 may be in contact with each other, but in other embodiments, the plurality of unit cells 100 may be spaced apart from each other. The plurality of unit cells 100 may be located on a lower side of the interior space 210 of the case 200 but is not limited thereto.

The case 200 may have the interior space 210 accommodating the plurality of unit cells 100. The interior space 210 of the case 200 may be of various suitable rechargeable battery accommodating space forms. The interior space 210 of the case 200 may have various suitable volumes. The case 200 may include various suitable lower covers, side covers, upper covers, or the like configured to accommodate the plurality of unit cells 100.

The fire-extinguishing agent 300 may be spaced apart from the plurality of unit cells 100 in the interior space 210 of the case 200. The fire-extinguishing agent 300 may extinguish a flame FI generated in the interior space 210 by generating a solid aerosol at a reference temperature (e.g., a predetermined temperature), and thereby may extinguish the flame FI.

For example, the fire-extinguishing agent 300 may generate a solid aerosol including a potassium radical at the reference temperature of 300°C or about 300°C or more. When the flame FI is generated in one unit cell 100 from among the plurality of unit cells 100, as the fire-extinguishing agent 300 generates a solid aerosol including a potassium radical, an endothermic reaction occurs in the fire-extinguishing agent 300 to generate a stable compound. Therefore, the temperature of the interior space 210 of the case 200 where the flame FI is generated is lowered, such that an ignited unit cell 100 from among the plurality of unit cells 100 may be efficiently extinguished.

As another example, when the flame FI is generated in one unit cell 100 from among the plurality of unit cells 100, as the fire-extinguishing agent 300 generates a solid aerosol including a potassium radical, the potassium radical decreases the concentration H and OH in the interior space 210 of the case 200, and therefore, the concentration of H and OH in the interior space 210 of the case 200 where the flame FI is present is reduced or minimized, such that the ignited unit cell 100 from among the plurality of unit cells 100 may be efficiently extinguished.

As another example, as the concentration of H and OH in the interior space 210 of the case 200 is decreased due to the presence of $K_2O$ and $KO^-$, which are potassium compounds included in the solid aerosol generated by the fire-extinguishing agent 300, according to the Chemical Formula below (but not limited thereto), the fire in the ignited unit cell 100 located in the interior space 210 may be extinguished.

Chemical Formula $\quad K_2O + H^+ \rightarrow 2KOH, KOH + OH^- -+ H_2O, KO^- + H^+ \rightarrow KOH$

The fire-extinguishing agent 300 may be located on an upper side of the interior space 210 of the case 200 but is not limited thereto. The fire-extinguishing agent 300 may be attached to an inner surface 201 of the case 200 located on the upper side of the interior space 210 of the case 200.

For example, the fire-extinguishing agent 300 may be attached to the inner surface 201 of the case 200 by various suitable attachment elements, such as tape (e.g. adhesive tape), or may be attached to the inner surface 201 of the case 200 by a support member, such as a support stand protruding from the inner surface 201 of the case 200. The fire-extinguishing agent 300 may be covered by various suitable cover elements, such as capsules.

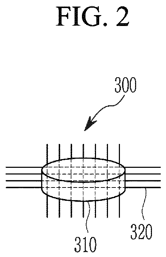

Referring to FIG. 2, the fire-extinguishing agent 300 may include a mixture 310, in which various suitable potassium compounds and various suitable resins are mixed, and a mesh 320 supporting the mixture 310. The mixture 310 may have a form in which potassium compounds and resins are squeezed (e.g., pressed) at high temperature and high pressure, but is not limited thereto. The mesh 320 supports the mixture 310. The mesh 320 may be supported on the inner surface 201 of the case 200 but is not limited thereto. The mesh 320 penetrates (e.g., extends through) and supports the mixture 310 in a horizontal direction but is not limited thereto. In other embodiments, the mesh 320 may support an upper surface of the mixture 310 or a lower surface of the mixture 310.

Because the mixture 310 of the fire-extinguishing agent 300 is supported by the mesh 320, the mixture 310 of the fire-extinguishing agent 300 ignited by the ignited unit cell is supported by the mesh 320, and therefore, the ignited mixture 310 is prevented from falling from the mesh 320 to the unit cell and increasing the temperature of the unit cell.

A weight of the fire-extinguishing agent 300 may satisfy Equation 1 below.

Equation 1

$$Y=0.0088X+0.211$$

In the Equation 1, Y is a weight of the fire-extinguishing agent 300 per volume of the interior space 210 of the case 200 (g/L) and X is a capacity (Wh) of one of the plurality of unit cells 100 in the interior space 210 of the case 200. The volume of the interior space 210 of the case 200 may be 6.8L or about 6.8L but is not limited thereto.

When the interior space 210 of the case 200 may have various volumes, X in Equation 1 may satisfy Equation 2 below.

Equation 2

$$X=V*6.8/Z$$

In the Equation 2, V is a capacity (Wh) of one of the plurality of unit cells 100 and Z is a volume (L) of the interior space 210 of the case 200.

When the weight of the fire-extinguishing agent 300 per volume of the interior space 210 of the case 200 (g/L) satisfies the above-described Equation 1 and Equation 2, the rechargeable battery pack 1000 including the fire-extinguishing agent 300 configured to actively extinguish the ignited unit cell 100 from among the plurality of unit cells 100 is provided.

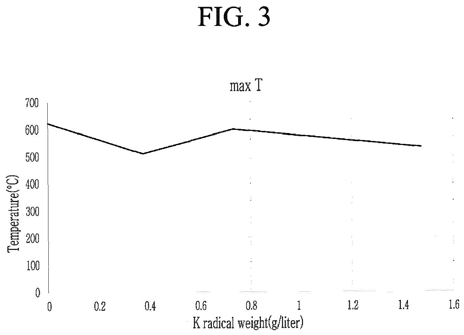

Hereinafter, referring to FIG. 3 to FIG. 5, experimental results confirming the first extinguishing effect depending on the weight of the fire-extinguishing agent 300 of the rechargeable battery pack 1000 according to an embodiment will be described.

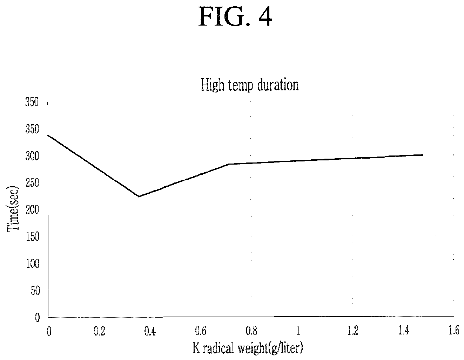

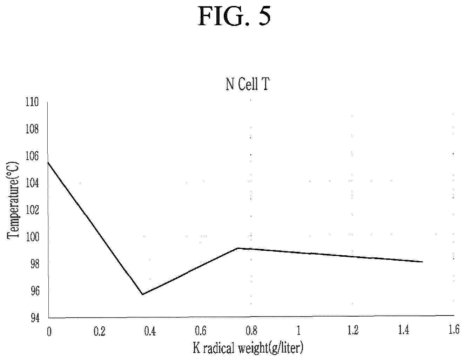

FIG. 3 to FIG. 5 are graphs showing experimental results confirming the first extinguishing effect depending on a weight of a fire-extinguishing agent of a rechargeable battery pack according to an embodiment. FIG. 3 is a graph showing the maximum temperature (max T) of the ignited unit cell depending on the weight (K radical weight) of the fire-extinguishing agent per volume of the interior space when the interior space of the case has a volume of 6.8L. FIG. 4 is a graph showing the maximum temperature duration (High temp duration) of the ignited unit cell depending on the weight (K radical weight) of the fire-extinguishing agent per volume of the interior space when the interior space of the case has a volume of 6.8L. FIG. 5 is a graph showing the temperature (N Cell T) of unit cells around the ignited unit cell depending on the weight (K radical weight) of the fire-extinguishing agent per volume of the interior space when the interior space of the case has a volume of 6.8L. Here, unit cells nearby the ignited unit cell may include the ignited unit cell and another unit cell neighboring (or adjacent) thereto.

Referring to FIG. 3 to FIG. 5, when the interior space of the case has the 6.8L volume, as an example, and each of the plurality of unit cells 100 accommodated in the interior space of the case 200 has a capacity (e.g., a battery capacity or energy storage capacity) of 18Wh, and the distance between the fire-extinguishing agent and the plurality of unit cells is in a range of about 2 mm to about 70 mm, the maximum temperature (max T) of the ignited unit cell, the maximum temperature duration (High temp duration), the temperature (N Cell T) of nearby unit cells have lowest points when the weight of the fire-extinguishing agent is 0.37 g/L.

For example, when 18Wh is substituted for X in Equation 1 below, 0.37 g/L is calculated for Y.

### Equation 1

$$Y=0.0088X+0.211$$

In the Equation 1, Y is the weight (g/L) of the fire-extinguishing agent per volume of the interior space of the case and X is the battery capacity (Wh) of one of the plurality of unit cells when the interior space of the case has a known (or predetermined) volume.

As shown in experimental results described above, when the interior space of the case has a volume of 6.8L, the maximum temperature (max T) of the ignited unit cell in the interior space of the case 200, the maximum temperature duration (High temp duration), the temperature (N Cell T) of nearby unit cells 100 have lowest points at a weight of the fire-extinguishing agent of 0.37 g/L calculated according to Equation 1.

For example, when the interior space of the case 200 has various volumes, X in Equation 1 may satisfy Equation 2 below.

### Equation 2

$$X=V*6.8/Z$$

In the Equation 2, V is a capacity (Wh) of one of the plurality of unit cells 100 and Z is a volume (L) of the interior space of the case.

When the volume of the interior space of the case is 0.765L and the battery capacity of one of the plurality of unit cells is 18Wh, 160Wh may be calculated for X by substituting 18Wh for V and substituting 0.765L for Z in Equation 2. When 160Wh is substituted for X in Equation 1, 1.62 g/L may be calculated for Y.

When the volume of the interior space of the case is 0.765L, the maximum temperature of the ignited unit cell in the interior space of the case, the maximum temperature duration, the temperature of nearby unit cells may have the lowest point at 1.62 g/L calculated according to Equation 1 and Equation 2.

Referring to FIG. 1, for example, the volume of the interior space 210 of the case 200 may be 10L or about 10L and the weight of the fire-extinguishing agent 300 may be in a range of about 1g or about 1g to 32g or about 32g. When the weight of the fire-extinguishing agent 300 is less than or about 1g, it is difficult to handle the fire-extinguishing agent 300, it is difficult to attach the fire-extinguishing agent 300 to the interior surface 201, and at the same time, it is difficult to extinguish the ignited unit cell 100 because the amount of the fire-extinguishing agent 300 is insufficient. When the weight of the fire-extinguishing agent 300 exceeds 32g or about 32g, the ignited unit cell 100 may be extinguished, but the fire may propagate to the unit cells 100 nearby the ignited unit cell 100 due to the heat generated by the ignition of the fire-extinguishing agent 300 itself. It may be confirmed that the numerical limitation of the volume of the interior space 210 of the case 200 being 10L or about 10L and the weight of the fire-extinguishing agent 300 being in a range of 1g or about 1g to 32g or about 32g define threshold values of upper and lower limits.

Referring to FIG. 1, a distance between the fire-extinguishing agent 300 and the plurality of unit cells 100 may be in a range of 2mm or about 2 mm to 70mm or about 70 mm. Here, the distance between the fire-extinguishing agent 300 and the plurality of unit cells 100 may include a first distance L1 between the fire-extinguishing agent 300 and one unit cell 100 located vertical thereto (e.g., aligned therewith), a second distance L2 between the fire-extinguishing agent 300 and another unit cell 100, and a third distance L3 between the fire-extinguishing agent 300 and a further unit cell 100. The distance between the fire-extinguishing agent 300 and the plurality of unit cells 100 may include a distance between the fire-extinguishing agent 300 and the one of the plurality of unit cells 100 and a distance between the fire-extinguishing agent 300 and each of the plurality of unit cells 100.

For example, when the interior space 210 of the case 200 has a volume of 6.8L or about 6.8L, the battery capacity one of the plurality of unit cells 100 is 18Wh or about 18Wh, and the fire-extinguishing agent 300 has a weight of 5g or about 5g, the distance between the fire-extinguishing agent 300 and the plurality of unit cells 100 may be in a range of 2mm or about 2 mm to 70mm or about 70 mm. When the distance between the fire-extinguishing agent 300 and the plurality of unit cells 100 is less than 2mm or about 2 mm, the fire-extinguishing agent 300 may block the path of the flame FI of the ignited unit cell 100, and at the same time, the temperature of the ignited unit cell 100 and the nearby unit cell 100 may be increased due to the ignition heat of the fire-extinguishing agent 300 itself. When the distance between the fire-extinguishing agent 300 and the plurality of unit cells 100 exceeds 70mm or about 70 mm, the heat transferred from the flame FI of the ignited unit cell 100 to the fire-extinguishing agent 300 may be lower than (e.g., may not reach) the reference temperature (e.g., 300°C or about 300°C or higher) to ignite the fire-extinguishing agent 300, such that the fire-extinguishing agent 300 may not generate the solid aerosol. The distance between the fire-extinguishing agent 300 and the plurality of unit cells 100 being in a range of 2mm or about 2 mm to 70mm or about 70 mm specify threshold values of upper and lower limits.

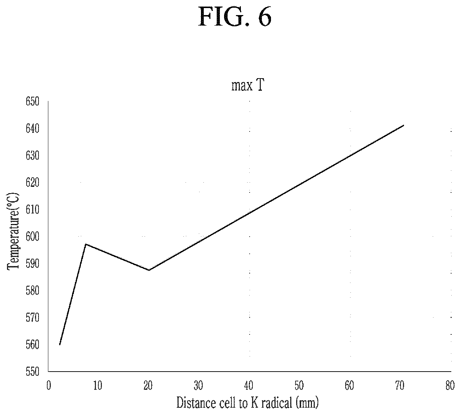

Hereinafter, referring to FIG. 6 to FIG. 8, experimental results confirming the fire extinguishing effect of the rechargeable battery pack 1000 according to an embodiment depending on the distance between the fire-extinguishing agent 300 and the plurality of unit cells 100 will be described.

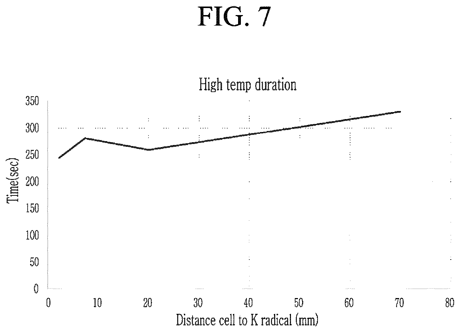

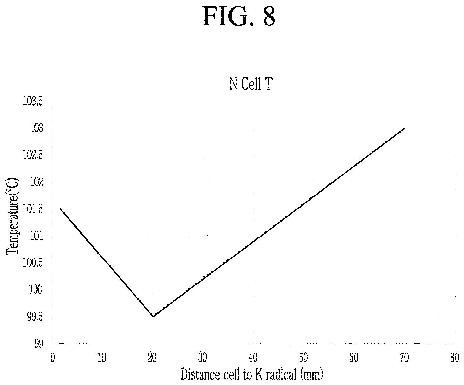

FIG. 6 is a graph showing the maximum temperature (max T) of the ignited unit cell depending on the distance (Distance cell to K radical) between the fire-extinguishing agent 300 and the plurality of unit cells 100 when the interior space 210 of the case 200 has a volume of 6.8L, the battery capacity of one of the plurality of unit cells 100 is 18Wh, and fire-extinguishing agent 300 has a weight of 5g. FIG. 7 is a graph showing the maximum temperature duration (High temp duration) of the ignited unit cell 100 depending on the distance (Distance cell to K radical) between the fire-extinguishing agent 300 and the plurality of unit cells 100 when the interior space 210 of the case 200 has a volume of 6.8L, the battery capacity of one of the plurality of unit cells 100 is 18Wh, and fire-extinguishing agent 300 has a weight of 5g. FIG. 8 is a graph showing the temperature (N Cell T) of the unit cells 100 nearby the ignited unit cell 100 depending on the distance (Distance cell to K radical) between the fire-extinguishing agent 300 and the plurality of unit cells 100 when the interior space 210 of the case 200 has a volume of 6.8L, the battery capacity of one of the plurality of unit cells 100 is 18Wh, and fire-extinguishing agent 300 has a weight of 5g.

Referring to FIG. 6 to FIG. 8, when the interior space 210 of the case 200 has a volume of 6.8L, the battery capacity of one of the plurality of unit 100 100 is 18Wh, and fire-extinguishing agent 300 has a weight of 5g, the maximum temperature and maximum temperature duration of the ignited unit cell 100 is low when the distance between the unit cell 100 and the fire-extinguishing agent 300 is in a range of 2 mm or about 2 mm to 32 mm or about 32 mm, and the temperature of the unit cells 100 nearby the ignited unit cell 100 is low when the distance between the unit cell 100 and the fire-extinguishing agent 300 is in a range of 2 mm or about 2 mm to 32 mm or about 32 mm and is the lowest when the distance between the unit cell 100 and the fire-extinguishing agent 300 is 20 mm or about 20 mm. A smaller distance may disrupt the flame FI of the ignited unit cell 100 before the fire-extinguishing agent 300 is ignited, leading to flames in the surrounding unit cells 100, and the heat generated when the fire-extinguishing agent 300 is ignited is transferred to nearby unit cells 100 such that the temperature of the nearby unit cells 100 is increased.

According to the experimental results described above, when the interior space 210 of the case 200 has a volume of 6.8L, the battery capacity of the plurality of unit cells 100 is 18Wh, and fire-extinguishing agent 300 has a weight of 5g, the distance between the fire-extinguishing agent 300 and the plurality of unit cells 100 is ideally in a range of 2 mm or about 2 mm to 32 mm or about 32 mm and specifies threshold values of upper and lower limits.

In addition, when the interior space 210 of the case 200 has a volume of 6.8L, the battery capacity of one of the plurality of unit cells 100 is 18Wh, and fire-extinguishing agent 300 has a weight of 5g, the distance between the fire-extinguishing agent 300 and the plurality of unit cells 100 should be 20 mm or about 20 mm.

For example, in the rechargeable battery pack 1000 according to an embodiment, when the weight of the fire-extinguishing agent 300 per volume of the interior space 210 of the case 200 (g/L) satisfies Equation 1, the maximum temperature of the ignited unit cell 100, the maximum temperature duration, the temperature of the nearby unit cells 100 become lowest, and therefore, the ignited unit cell 100 from among the plurality of unit cells 100 may be actively extinguished.

In addition, the rechargeable battery pack 1000 according to an embodiment includes the configuration of the volume of the interior space 210 of the case 200 being 10L or about 10L and the weight of the fire-extinguishing agent 300 being in a range of 1g or about 1g to 32g or about 32g, in which range the ignited unit cell 100 from among the plurality of unit cells 100 may be actively extinguished.

In addition, the rechargeable battery pack 1000 according to an embodiment includes the configuration of the distance between the fire-extinguishing agent 300 and the plurality of unit cells 100 being in a range of 2 mm or about 2 mm to 70 mm or about 70 mm, in which range ignited unit cell 100 from among the plurality of unit cells 100 may be actively extinguished.

In addition, the rechargeable battery pack 1000 according to an embodiment includes the configuration of the distance between the fire-extinguishing agent 300 and the plurality of unit cells 100 being in a range of 2 mm or about 2 mm to 32 mm or about 32 mm, in which range the ignited unit cell 100 from among the plurality of unit cells 100 may be actively extinguished.

In addition, the rechargeable battery pack 1000 according to an embodiment includes the configuration of the distance between the fire-extinguishing agent 300 and the plurality of unit cells 100 being 20 mm or about 20 mm, at which range the ignited unit cell 100 among the plurality of unit cells 100 may be actively extinguished.

The rechargeable battery pack 1000 configured to actively extinguish the ignited unit cell 100 from among the plurality of unit cells 100 is provided.

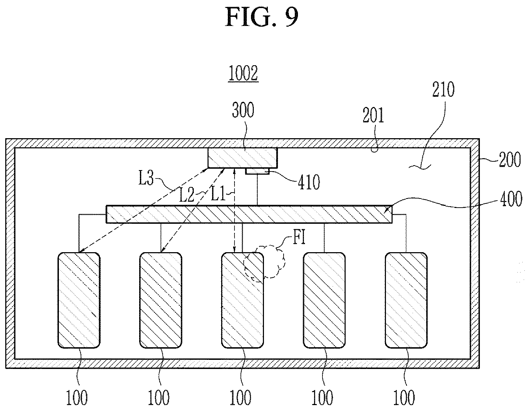

Hereinafter, referring to FIG. 9, a rechargeable battery pack 1002 according to another embodiment will be described.

Hereinafter, parts and configurations that are different from the rechargeable battery pack 1000 according to the above-described embodiment will be primarily described.

FIG. 9 is a schematic illustration of a rechargeable battery pack 1002 according to another embodiment.

Referring to FIG. 9, the rechargeable battery pack 1002 according to another embodiment may include the plurality of unit cells 100, the case 200, the fire-extinguishing agent 300, a battery management unit 400.

The battery management unit 400 may be located between the plurality of unit cells 100 and the fire-extinguishing agent 300. The battery management unit 400 may be connected to the plurality of unit cells 100 and the fire-extinguishing agent 300. The battery management unit 400 may sense (e.g., may measure and/or may determine) the temperature the plurality of unit cells 100. The battery management unit 400 may heat (e.g., may ignite) the fire-extinguishing agent 300 when the temperature of at least one unit cell 100 from among the plurality of unit cells 100 exceed a reference temperature. The fire-extinguishing agent 300 heated by the battery management unit 400 may generate a solid aerosol including a potassium radical.

The battery management unit 400 may include a heater 410. The heater 410 may be attached to the fire-extinguishing agent 300, and the battery management unit 400 may heat the heater 410 to heat the fire-extinguishing agent 300.

The battery management unit 400 may include various suitable battery management systems but is not limited thereto. In some embodiments, the battery management unit 400 may include a temperature sensor configured to sense (e.g., configured to determine or measure) the temperature of the plurality of unit cells 100 and various heating elements for heating the fire-extinguishing agent 300.

For example, because the rechargeable battery pack 1002 includes the battery management unit 400 configured to sense the temperature of the plurality of unit cells 100 and heat the fire-extinguishing agent 300 to generate the solid aerosol from the fire-extinguishing agent 300, from among the plurality of unit cells 100, the ignited unit cell 100 or the unit cell 100 having high(est) possibility of ignition, which exceeds the reference temperature, may be actively extinguished.

In addition, in the rechargeable battery pack 1002, when the weight of the fire-extinguishing agent 300 per volume of the interior space 210 of the case 200 (g/L) satisfies Equation 1, the maximum temperature of the ignited unit cell 100, the maximum temperature duration, the temperature of the nearby unit cells 100 become lowest, and therefore, the ignited unit cell 100 from among the plurality of unit cells 100 may be actively extinguished.

In addition, the rechargeable battery pack 1002 includes the configuration of the volume of the interior space 210 of the case 200 being 10L or about 10L and the weight of the fire-extinguishing agent 300 being in a range of 1g or about 1g to 32g or about 32g, in which range the ignited unit cell 100 from among the plurality of unit cells 100 may be actively extinguished.

In addition, the rechargeable battery pack 1002 includes the configuration of the distance between the fire-extinguishing agent 300 and the plurality of unit cells 100 being in a range of 2 mm or about 2 mm to 70 mm or about 70 mm, in which range the ignited unit cell 100 from among the plurality of unit cells 100 may be actively extinguished.

In addition, the rechargeable battery pack 1002 includes the configuration of the distance between the fire-extinguishing agent 300 and the plurality of unit cells 100 being in a range of about 2 mm to about 32 mm, in which range the ignited unit cell 100 from among the plurality of unit cells 100 may be actively extinguished.

In addition, the rechargeable battery pack 1002 includes the configuration of the distance between the fire-extinguishing agent 300 and the plurality of unit cells 100 being 20 mm or about 20 mm, at which range the ignited unit cell 100 from among the plurality of unit cells 100 may be actively extinguished.

The rechargeable battery pack 1002 configured to actively extinguish the ignited unit cell 100 among the plurality of unit cells 100 is provided.

While this disclosure has been described in connection with what is presently considered to be practical embodiments, it is to be understood that the disclosure is not limited to the disclosed embodiments but is intended to cover various modifications and equivalent arrangements included within the scope of the appended claims.

**Claims**

**1.** A rechargeable battery pack comprising:

a plurality of unit cells neighboring to each other;
a case having an interior space accommodating the plurality of unit cells; and
a fire-extinguishing agent spaced apart from the plurality of unit cells in the interior space of the case and configured to generate a solid aerosol at a reference temperature,
wherein, when the interior space of the case has a known volume, a weight of the fire-extinguishing agent satisfies Equation 1:

$$Y = 0.0088X + 0.211$$

wherein Y is a weight of the fire-extinguishing agent per volume of the interior space of the case (g/L), and X is a battery capacity (Wh) of one of the plurality of unit cells.

2. The rechargeable battery pack as claimed in claim 1, wherein, in Equation 1, X satisfies Equation 2:

$$X = V*6.8/Z$$

wherein V is a battery capacity (Wh) of one of the plurality of unit cells, and Z is a volume (L) of the interior space of the case.

3. The rechargeable battery pack as claimed in claim 1 or 2, wherein, when the volume of the interior space of the case is 10L, the weight of the fire-extinguishing agent is in a range of 1g to 32g.

4. The rechargeable battery pack as claimed in claim 1, 2 or 3, wherein a distance between the fire-extinguishing agent and the plurality of unit cells is in a range of 2 mm to 70 mm.

5. The rechargeable battery pack as claimed in any preceding claim, wherein a distance between the fire-extinguishing agent and the plurality of unit cells is in a range of 2 mm to 32 mm.

6. The rechargeable battery pack as claimed in any preceding claim, wherein a distance between the fire-extinguishing agent and the plurality of unit cells is 20 mm.

7. The rechargeable battery pack as claimed in claim 1, wherein the volume of the interior space of the case is 6.8L.

8. The rechargeable battery pack as claimed in any preceding claim, wherein the solid aerosol generated by the fire-extinguishing agent comprises a potassium radical.

9. The rechargeable battery pack as claimed in claim 8, wherein the fire-extinguishing agent comprises a mixture comprising a potassium compound and a resin.

10. The rechargeable battery pack as claimed in claim 9, wherein the fire-extinguishing agent further comprises a mesh supporting the mixture.

11. The rechargeable battery pack as claimed in claim 10, wherein the mesh penetrates the mixture.

12. The rechargeable battery pack as claimed in any preceding claim, wherein the plurality of unit cells is located on a lower side of the interior space of the case, and
wherein the fire-extinguishing agent is located on an upper side of the interior space of the case.

13. The rechargeable battery pack as claimed in claim 12, wherein the fire-extinguishing agent is attached to an inner surface of the case.

14. The rechargeable battery pack as claimed in any preceding claim, further comprising a battery management unit connected to the plurality of unit cells and the fire-extinguishing agent and arranged between the plurality of unit cells and the fire-extinguishing agent,
wherein the battery management unit is configured to sense the temperature each of the plurality of unit cells and, when a temperature of one of the plurality of unit cells exceeds the reference temperature, to heat the fire-extinguishing agent.

15. The rechargeable battery pack as claimed in claim 14, wherein the battery management unit further comprises a heater attached to the fire-extinguishing agent, and
wherein the battery management unit is configured to heat the heater.

# FIG. 1

FIG. 2

FIG. 3

# FIG. 4

**High temp duration**

# FIG. 5

N Cell T

# FIG. 6

# FIG. 7

**High temp duration**

# FIG. 8

N Cell T

# FIG. 9

Europäisches
Patentamt

European
Patent Office

Office européen
des brevets

# EUROPEAN SEARCH REPORT

**Application Number**

EP 24 21 2703

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 790 106 A1 (SAMSUNG SDI CO LTD [KR]) 10 March 2021 (2021-03-10) | 1-8,12, 13 | INV. H01M50/383 |
| Y | * abstract * <br> * figures 1,2, 3, 4, 17 * <br> * paragraph [0062] - paragraph [0064] * <br> ----- | 8-11,14, 15 | |
| Y | DE 10 2023 104790 A1 (FORD GLOBAL TECH LLC [US]) 7 September 2023 (2023-09-07) <br> * abstract * <br> * claim 2 * <br> * paragraph [0054] * <br> ----- | 8,14,15 | |
| Y | WO 2022/265460 A1 (LG ENERGY SOLUTION LTD [KR]) 22 December 2022 (2022-12-22) <br> * abstract * <br> * paragraph [0074] * <br> ----- | 8,10,11 | |
| Y | CN 115 911 708 A (XIAMEN POWER ON TECH CO LTD) 4 April 2023 (2023-04-04) <br> * abstract * <br> * paragraph [0057] * <br> ----- | 8,9 | |

**TECHNICAL FIELDS SEARCHED (IPC)**

H01M

The present search report has been drawn up for all claims

| Place of search | Date of completion of the search | Examiner |
|---|---|---|
| The Hague | 1 April 2025 | Kämper, Fabian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 2703

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2025

| Patent document cited in search report | Publication date | Patent family member(s) | Publication date |
|---|---|---|---|
| EP 3790106 A1 | 10-03-2021 | CN 112448076 A | 05-03-2021 |
| | | EP 3790106 A1 | 10-03-2021 |
| | | HU E069640 T2 | 28-03-2025 |
| | | KR 20210029129 A | 15-03-2021 |
| | | PL 3790106 T3 | 24-03-2025 |
| | | US 2021074973 A1 | 11-03-2021 |
| DE 102023104790 A1 | 07-09-2023 | CN 116706310 A | 05-09-2023 |
| | | DE 102023104790 A1 | 07-09-2023 |
| | | US 2023277882 A1 | 07-09-2023 |
| WO 2022265460 A1 | 22-12-2022 | CN 116636069 A | 22-08-2023 |
| | | EP 4333183 A1 | 06-03-2024 |
| | | JP 7585493 B2 | 18-11-2024 |
| | | JP 2023552352 A | 15-12-2023 |
| | | KR 20220168918 A | 26-12-2022 |
| | | US 2024088515 A1 | 14-03-2024 |
| | | WO 2022265460 A1 | 22-12-2022 |
| CN 115911708 A | 04-04-2023 | CN 115911708 A | 04-04-2023 |
| | | US 2024178514 A1 | 30-05-2024 |

EPO FORM P0459

For more details about this annex : see Official Journal of the European Patent Office, No. 12/82